# EUROPÄISCHE PATENTSCHRIFT

(11) **EP 2 158 107 B1**
(45) Veröffentlichungstag und Bekanntmachung des Hinweises auf die Patenterteilung: **19.09.2012**
(21) Anmeldenummer: 08773418.2
(22) Anmeldetag: 12.06.2008
(51) Int. Cl.: B60N 2/48, F16C 1/12, F16C 11/06

(54) **KOPPELUNGS-ENTKOPPELUNGSEINRICHTUNG FÜR EIN ÜBERTRAGUNGSMITTLEL, INSBESONDERE EINES FAHRZEUGSITZES MIT CRASHAKTIVER KOPFSTÜTZE, UND FAHRZEUGSITZ**
COUPLING/UNCOUPLING DEVICE FOR A TRANSMISSION MEANS IN PARTICULAR ON A VEHICLE SEAT WITH A CRASH-ACTIVE HEADREST AND VEHICLE SEAT
UNITE DE COUPLAGE-DÉCOUPLAGE POUR UN ORGANE DE TRANSMISSION, EN PARTICULIER UN SIÈGE DE VÉHICULE COMPRENANT UN APPUIE-TÊTE ACTIF EN CAS D'IMPACT, ET SIÈGE DE VÉHICULE ASSOCIÉ

(30) Priorität: 14.06.2007 DE 102007028036; 03.09.2007 DE 102007041613; 10.12.2007 DE 102007059646
(43) Veröffentlichungstag der Anmeldung: 03.03.2010
(73) Patentinhaber: Johnson Controls GmbH, 51399 Burscheid (DE)
(72) Erfinder: SCHMITZ, Andreas, 51399 Burscheid (DE)
(74) Vertreter: Wolff, Felix
(86) Internationale Anmeldenummer: PCT/EP2008/004740
(87) Internationale Veröffentlichungsnummer: WO 2008/151805

(56) Entgegenhaltungen:
- DE-B3-102006 001 143
- GB-A- 2 082 245
- GB-A- 2 417 756
- US-A- 3 276 798
- US-A- 4 225 261
- US-B2- 6 802 275

## Beschreibung

Die Erfindung betrifft eine Koppelungs- Entkopplungseinrichtung für ein ' Übertragungs- und/oder Verbindungsmittel, insbesondere den Bowdenzug eines Fahrzeugsitzes mit einer crash-aktiven Kopfstütze, sowie einen entsprechend ausgestatteten Kraftfahrzeugsitz.

In der noch unveröffentlichten deutschen Patentanmeldung DE 10 2006 019 176.5-16 wird eine Koppelungseinrichtung für eine Rückenlehne mit einer crash-aktiven Kopfstütze offenbart, welche mittels eines vom Insassen beaufschlagten Aktivierungsmittels bei einem Unfall (Heckaufprall) in Teilen zum Kopf des Insassen hin verlagert wird. Zum grundsätzlichen Aufbau und der Funktion derartiger Kopfstützen wird auf die Druckschrift WO 2005/ 097545 A2 verwiesen. Die Koppelungseinrichtung verbindet unlösbar oder reversibel lösbar ein erstes Segment eines Übertragungsmittels, Insbesondere eines Bowdenzugs mit einem zweiten Segment dieses Übertragungsmittels und bewirkt nach der Koppelung eine Zugübertragung vom im unteren Lehnenteil angeordneten Aktuierungsmittel zur in der Kopfstütze befindlichen Antriebseinrichtung. Weiterer, der Anmelderin bekannter Stand der Technik sind die deutschen Gebrauchsmuster G 84 25 960.4 und die DE 20 2004 019 232 sowie die deutschen Offenlegungsschriften DE 10 2005 009 930 und DE 100 54 826 und die GB-A-2082245. Alle im Stand der Technik beschriebenen Koppelungseinrichtungen sind entweder vergleichsweise kompliziert aufgebaut und/oder die Kopplung der beiden Segment ist für eine crashaktive-Kopfstütze ungeeignet.

Es war deshalb die Aufgabe eine Kopplungs- Entkopplungseinrichtung zur Verfügung zu stellen, die die Nachteile des Standes der Technik nicht aufweist.

Gelöst wird die Aufgabe mit einer Koppelungs- und/oder Entkopplungseinrichtung gemäß Patentanspruch 1.

Die erfindunsgsgemäße Koppelungs- und/oder Entkopplungseinrichtung ist sehr einfach aufgebaut und die Verbindung zwischen den beiden Segmenten sehr leicht herzustellen.

Mit der erfindungsgemäßen Koppelungs- und/oder Entkopplungseinrichtung werden ein erstes und ein zweites Segment eines Übertragungs- und/oder Verbindungsmlttels miteinander verbunden. Bei diesem Übertragungs- und/oder Verbindungsmittel handelt es sich um ein Mittel, mit dem zwei Teile miteinander verbunden werden können und/oder mit dem Kräfte, insbesondere Zugkräfte, aber auch Biege- und/oder Drehmomente übertragen werden können. Vorzugsweise handelt es sich bei dem Übertragungsmittel um die Seele eines Bowdenzuges und demnach bei dem ersten und zweiten Segment um Teile dieser Seele. Es kann sich aber beispielsweise auch um zwei Teile eines Verschlusses oder eines Schiosses handeln und demnach bei dem ersten und dem zweiten Segment um zwei Teile eines Verschlusses oder eines Schlosses, die miteinander verbunden werden sollen.

Erfindungsgemäß ist an einem, dem ersten, Segment ein Endfitting angeordnet. Ein Endfitting im Sinne der Erfindung ist insbesondere eine Verdickung, die besonders bevorzugt zumindest bezüglich einer Drehachse rotationsymmetrisch ist. Ganz besonders bevorzugt ist das Endfitting kugelförmig.

Weiterhin erfindungsgemäß weist die Koppelungs- und/oder Entkopplungseinrichtung ein Aufnahmeteil auf, das an dem anderen, dem zweiten Segment, angeordnet ist und/oder mit diesem zusammenwirkt. Dieses Aufnahmeteil ist vorzugsweise so gestaltet, dass es das Endfitting vollständig aufnehmen kann. Erfindungsgemäß gehen das Endfitting und der Aufnahmeteil eine Schnappverbindung ein. Eine Schnappverbindung Im Sinne der Erfindung ist eine Verbindung, bei der ein aus einer Ursprungslage heraus bewegtes Teil selbststätig zumindest teilweise in Richtung der Ursprungslage zurückspringt, und dadurch die Verbindung insbesondere zwischen dem Endfitting und dem Aufnahmeteil erfolgt.

Erfindunsgsgemäß weist das Aufnahmeteil eine Öffnung auf, deren Querschnitt reversibel veränderbar ist Vorzugsweise erfolgt die reversible Veränderung des Querschnitts durch das Endfitting. Das Endfitting vergrößert vorzugsweise vor dem Eingehen der Schnappverbindung die Öffnung, wobei die Vergrößerung dann zumindest teilweise beim Eingehen der Schnappverbindung rückgängig gemacht wird. In einer anderen bevorzugten Ausführungsform wird, Insbesondere wenn sich das Endfitting in dem Aufnahmeteil befindet, der Querschnitt der Öffnung manuell oder motorisch vergrößert, so dass das Endfitting aus der Öffnung entfernt werden kann. Danach springt das Endfitting in seine ursprüngliche Lage zurück.

Erfindunsgsgemäß ragt in die Öffnung ein Mittel hinein, mit dem deren Querschnitt veränderbar ist. Bei dem Mittel kann es sich beispielsweise um einen Fortsatz handeln. Besonders bevorzugt ist dieses Mittel in Richtung der Öffnung vorgespannt, um zum einen Klappergeräusche zu vermindern und zum anderen die Schnappverbindung also die selbsttätige Rückstellung des Mittels zur Reduzierung des Querschnitts zu erreichen. Ganz besonders bevorzugt wirkt das Endfitting mit dem Mittel Zusammen, um dadurch den Querschnitt der Öffnung zu vergrößern. Vor dem Eingehen der Schnappverbindung wird das Mittel beispielsweise so von dem Endfitting vernetzt, dass es nicht mehr in den Querschnitt hineinragt. Dadurch vergrößert sich die Öffnung es Aufnahmeteiles und dieser kann den Endfitting aufnehmen und mit diesem zumindest teilweise einen Formschluss eingehen. Das Mittel kann aber auch manuell und/oder motorisch direkt oder indirekt angetrieben werden. Diese bevorzugte Ausführungsform wird insbesondere zum Lösen der Verbindung zwischen den beiden Segmenten benötigt. Das Mittel wird manuell oder motorisch aus dem Querschnitt der Öffnung entfernt, so dass sich diese vergrößert und das Endfitting durch die Öffnung bewegt werden kann.

Vorzugsweise reduziert sich der Querschnitt der Öffnung wieder, nachdem das Endfitting in dem Aufnahmeteil aufgenommen oder aus diesem entfernt worden ist. Dadurch wird insbesondere verhindert, dass das Endfitting ungewollt aus dem Aufnahmeteil rausrutscht. Dies erfolgt beispielsweise dadurch, dass das oben beschriebene Mittel, beispielsweise federgetrieben, vorzugsweise selbsttätig in die Öffnung zurückrutscht, Insbesondere zurückschnappt und deren Querschnitt wieder vermindert. Das Mittel kann aber auch jeden anderen Antrieb aufweisen.

In einer bevorzugten Ausführungsform der vorliegenden Erfindung ist das Überbagungs- und/oder Verbindungsmittel die Seele eines Bowdenzuges. Dieser Bowdenzug weist eine Hülle auf, die sich vorzugsweise an dem Aufnahmeteil abstützt.

Vorzugsweise weist die Koppelungs- und/oder Entkoppelungseinrichtung ein Mittel zum nachträglichen Lösen der Verbindung zwischen dem Endfitting und dem Aufnahmeteil auf.

Die erfindungsgemäße Koppelungs- und/oder Entkopplungseinrichtung kann in allen Bereichen eingesetzt werden, in denen Übertragungs- und/oder Verbindungsmittel vorhanden sind. Vorzugsweise ist die Koppeleinrichtung jedoch Teil einer Crash-aktiven-Kopfstütze, wie sie beispielsweise in der DE 10 2004 048 910.6, in der DE 10 2007 006 835.4 und in der WO 2005/ 097545 A2 beschrieben wird.

Vorzugsweise ist das erste Segment an der Kopfstütze oder deren Haltestange und das Aufnahmeteil an der Rückenlehne eines Kraftfahrzeugsitzes angeordnet.

Die erfindungsgemäße Koppelungs- und/oder Entkopplungseinrichtung ist vorzugsweise Teil eines Kraftfahrzeugsitzes. Ein weiterer Gegenstand der vorliegenden Erfindung ist deshalb ein Kraftfahrzeugsitz aufweisend die erfindungsgemäße Koppelungs- und/oder Entkopplungseinrichtung.

Vorzugsweise ist die erfindungsgemäße Koppelungs- und/oder Entkopplungseinrichtung Teil eines Kraftfahrzeugsitzes, einer Ladeklappe, einer Motorabdeckung, eines Verstaufaches. Sie kann dazu eingesetzt werden, den Fahrzeugsitz mit der Karosserie oder anderen Teilen des Fahrzeuginnenraums zu verbinden. Weiterhin kann die erfindungsgemäße Koppelungs- und/oder Entkopplungseinrichtung als Verschluss für die Ladeklappe, die Motorhaube und/oder der Abdeckung eines Verstaufaches, beispielsweise eines Handschuhfaches dienen. Das Endfitting ist dabei an einem Teil, beispielsweise der Klappe oder Haub und das Übertragungs- und/oder Verbindungsmittel an dem anderen Teil angeordnet. Beim Schließen rastet das Endfitting in das Übertragungs- und/oder Verbindungsmittel ein, so dass eine reversible Verbindung zwischen diesen entsteht, die dann von den Fahrzeuginsassen wieder gelöst werden kann.

Weiterhin kann das Übertragungs- und/oder Verbindungsmittel zur Befestigung von Transport- oder Laderaumteilen in Kraftfahrzeugen und/oder als Batteriepolverbindung dienen.

Im folgenden wird die Erfindung anhand der Figuren 1 - 10 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- Figur 1: zeigt eine nicht erfindungsgemäße Koppelungs-Entkopplungseinrichtung
- Figuren 2a -2c: zeigen die nicht erfindungsgemäße Erstellung der Verbindung zwischen dem Endfitting und dem Aufnahmeteil.
- Figur 3: zeigt eine Kopfstütze aufweisend die erfindungsgemäße Koppelungs- Entkopplungseinrichtung
- Figuren 4a, 4b: zeigen das nicht erfindungsgemäße Lösen der Verbindung zwischen dem Endfitting und dem Aufnahmeteil.
- Figuren 5a, 5b: zeigen eine weitere Ausführungsform der erfindungsgemäßen Koppelungs- Entkopplungseinrichtung.
- Figuren 6a, 6b: zeigen noch eine weitere Ausführungsform der erfindungsgemäßen Koppelungs- Entkopplungseinrichtung.
- Figuren 7a, 7b: zeigen noch eine weitere Ausführungsform der erfindungsgemäßen Koppelungs- Entkopplungseinrichtung.
- Figuren 8a, 8b: zeigen eine Kopfstütze mit der erfindungsgemäßen Koppelungs-Entkopplungseinrichtung.
- Figuren 9: zeigen eine Ausführungsform der erfindungsgemäßen Koppelungs-Entkopplungseinrichtung wie sie beispielsweise bei der Kopfstütze gemäß Figur 8 zum Einsatz kommen kann.
- Figur 10: Zeigt eine weitere Ausführungsform des Schiebers der erfindungsgemäßen Koppelungs- Entkopplungseinrichtung gemäß Figur 1.

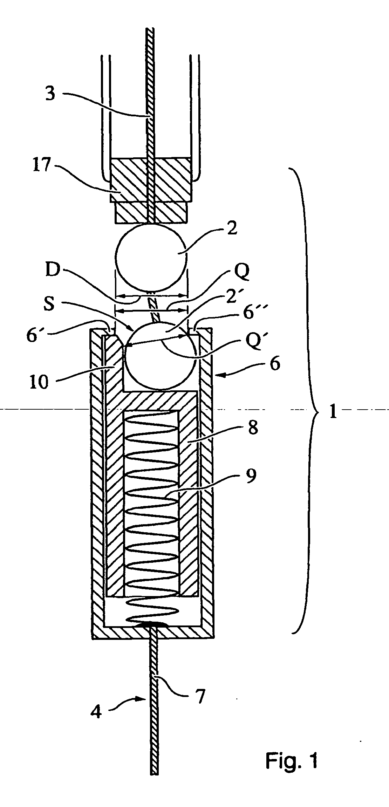

Wie aus Figur 1 ersichtlich, umfasst die Koppelungs- Entkopplungseinrichtung 1 ein Endfitting 2, welches an einem Ende eines erstes Segments des Übertragungsmittels, nämlich dem Segment 3 der Seele 4 eines Bowdenzugs, befestigt ist. Das Endfitting 2 weist eine größte Ausdehnung D auf und ist vorzugsweise bezüglich mindestens einer Achse rotationssymmetrisch ausgebildet. Im Ausführungsbeispiel ist der Endfitting kugelförmig, d.h. um mehrere Achsen rotationssymmetrisch, ausgebildet. Das Endfitting 2 ist durch eine Aufnahmeöffnung 5 in ein Aufnahmeteil 6 einsetzbar, welches sich am zugeordneten Ende des anderen Segments 7 der Seele 4 befindet. Die Größe der Aufnahmeöffnung 5 entspricht dabei im Wesentlichen der der Ausdehnung D des Endfittings 2. Im Ausführungsbeispiel ist die Aufnahmeöffnung 5 kreisrund ausgeführt. Das Aufnahmeteil 6 ist mit Mitteln versehen, welche geeignet sind, den freien Querschnitt Q der Aufnahmeöffnung 5 nach dem Einsetzen des Endfittings 2 selbsttätig auf einen freien Querschnitt Q' zu verkleinern, welcher geringer ist als die Ausdehnung des Endfittings 2 (in eingesetztem Zustand mit 2' bezeichnet). Das Endfitting 2' wird hierdurch im Aufnahmeteil 6 gefangen, so dass eine formschlüssige Verbindung zwischen den Segmenten 3, 7 hergestellt ist.

Das genannte Mittel ist ein kolbenartiger Schieber 8, welcher in dem hülsenförmigen Aufnahmeteil 6 längsverschieblich angeordnet ist und mittels einer Feder 9 in Richtung der in einer Axialfläche des Aufnahmeteils 6 vorgesehenen Aufnahmeöffnung 5 vorgespannt ist. Der Schieber 8 weist seinerseits an seiner der Aufnahmeöffnung 5 zugewandten Axialfläche einen seine Mantelfläche verlängernden, laschenartigen Fortsatz 10 auf. Dieser ist in seiner der Aufnahmeöffnung 5 zugeordneten Endposition zur Verkleinerung des freien Querschnitt Q auf den freien Querschnitt Q' geeignet. An seinem der Öffnung 5 zugewandten Ende weist der Fortsatz eine Abschrägung auf, damit die Kugel 2 in Richtung des Hohlraums in dem Aufnahmeteil geleitet wird. Die Lasche 10 wird von der Feder 9 gegen einen Endanschlag 6' gedrückt. Die Lasche 10 muss in dem vorliegenden Beispiel mindestens um das Maß X₁ absenkbar sein, damit die Kugel 2 durch die Aufnahmeöffnung 5 einführbar ist. Dementsprechend muss im unteren Bereich mindestens ein Weg X₂ zur Verfügung gestellt werden, dessen Länge mindestens dem Maß X₁ entspricht. Im eingebauten Zustand liegt das Endfitting 2 an einem Vorsprung 6" in dem Aufnahmeteil 6 an.

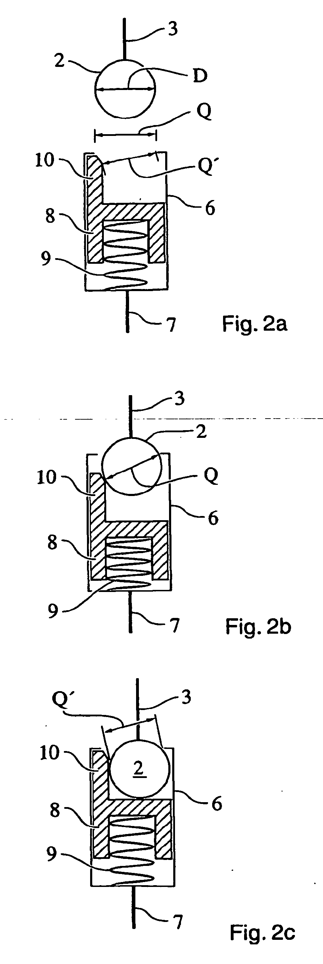

Figur 2 zeigt die Erstellung der Verbindung zwischen dem Endfitting 2 und dem Aufnahmeteil 6 schematisch in 3 verschiedenen Phasen.
- Figur 2a:: Ausgangsposition. Die Aufnahmeöffnung 5 weist an sich einen zum Einsetzen des Endfitting 2 ausreichenden freien Querschnitt Q auf, der durch den in oberer Endstellung befindlichen Schieber 8 auf einen freien Querschnitt Q' reduziert wird.
- Figur 2b:: während des Einführens des Endfittings in den Aufnahmeteil 6 wird der Schieber 8 entgegen der Kraft der Feder 9 im Aufnahmeteil 6 verschoben und ermöglicht das Einführen des Endfittigs 2 bis in das Innere des Aufnahmeteils 6.
- Figur 2c:: Sobald sich das Endfitting 2 hinreichend in dem Aufnahmeteil befindet, stellt sich, d.h. schnappt, der Schieber 8 in Ausgangsstellung zurück und verschließt die Aufnahmeöffnung 5 wieder teilweise. Der freie Querschnitt Q' ist kleiner als der Durchmesser D des Endfitting 2, wodurch dieser im Aufnahmeteil 6 gefangen ist.

Durch diesen Vorgang wird die erfindungsgemäße Kopplungseinrichtung geschlossen.

Die Kontur des Fortsatzes 10 ist so ausgebildet, dass ein Zug auf das gefangene Endfitting 2 nur geringe oder keine von der Aufnahmeöffnung 5 weg gerichteten Axialkräfte auf den Schieber 8 bewirkt. Ein ungewolltes öffnen der Koppelungs-Entkopplungseinrichtung 1 ist damit ausgeschlossen. In dem vorliegenden Ausführungsbeispiel bewirkt ein Zug am Endfitting sogar eine Kraft auf den Fortsatz 10 in Richtung der Aufnahmeöffnung 5

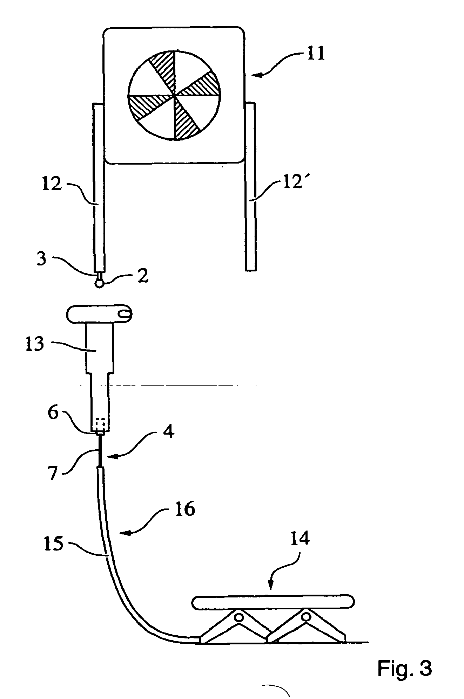

Figur 3 zeigt eine konkrete Einbausituation der erfindungsgemäßen Koppelungs-Entkopplungseinrichtung 1, die hier Teil einer crashaktiven Kopfstütze ist, wie sie beispielsweise in der WO 2006/037801 beschrieben ist. Die crashaktive Kopfstütze 11 ist über Haltestangen 12, 12' an der nicht dargestellten Rückenlehne eines Fahrzeugsitzes befestigt. Die Befestigung erfolgt über Kopfstützenhülsen 13 (nur für Haltestange 12 dargestellt), welche beispielweise in dem oberen Querholm der Rückenlehne eingelassen sind. Die Haltestange 12 wird dabei von oben senkrecht in die Kopfstützenhülse 13 eingesetzt und dort vorzugsweise höhen-verstellbar und/oder lösbar verrastet. Im unteren Bereich der Insassenanlagefläche der Rückenlehne ist ein Aktuierungsmittel 14 angeordnet, welches bei einem Heckaufprall durch die Masseträgheit des Sitzinsassen betätigt und dabei zusammengedrückt wird. Zum Aufbau geeigneter Aktuierungsmittel wird ausdrücklich auf die deutschen Patentanmeldungen DE 10 2004 048 910.6 und DE 10 2007 006 835.4 verwiesen.

Am Aktuierungsmittel 14 ist die Hülle 15 eines Bowdenzugs 16 schubfest befestigt, welche das zweite Segment 7 der Seele 4 des Bowdenzugs 16 aufnimmt. Das Segment 7 ist mit seinem der Koppelungs- Entkopplungseinrichtung 1 abgewandten Ende mit dem Aktuierungsmittel 14 verbunden. Das Aufnahmeteil 6, mit welchem das andere Ende des Segments 7 verbunden ist, ist von unten in die Kopfstützenhülse 13 eingesetzt und dort lösbar verklemmt.

Das erste Segment 3 der Seele 7 des Bowdenzugs 16 ist von der Kopfstütze 11 durch die hohle Haltestange 12 geführt, wobei das Endfitting 2 nach unten aus der Haltestange 12 herausragt, Ein durchbohrter Stopfen 17 am unteren Ende der Haltestange 12 (siehe Figur 1) hält das Endfitting 2 dabei jenseits der Haltestange 12.

Beim Einsetzen der Haltestange 12 in die-Kopfstützenhülse 13 wird das Endfitting 2 ohne weiteres Zutun (also selbsttätig) in der zuvor beschriebenen Weise im Aufnahmeteil 6 verankert. Beim weiteren Einschieben der Haltestange 12 löst sich das Aufnahmeteil 6 vorzugsweise aus der Kopfstützenhülse 13, so dass die Koppelungs- Entkopplungseinrichtung 1 nachfolgend in der Rückenlehne verlagerbar angeordnet ist und eine Höhenverstellung der Kopfstütze durch Verschieben der Haltestange 12 in der Kopfstützenhülse 13 nicht behindert. Es versteht sich, dass die Klemmkräfte des Aufnahmeteils 6 in der Kopfstützenhülse 13 größer sein müssen als die Verschiebekräfte des Schiebers 8 im Aufnahmeteil 6. Ein Entfernen der Kopfstütze 11 ist jedoch nicht mehr möglich, da die Koppelungs-Entkopplungseinrichtung 1 keine Mittel zum erneuten Trennen der Segment 3 und 7 aufweist.

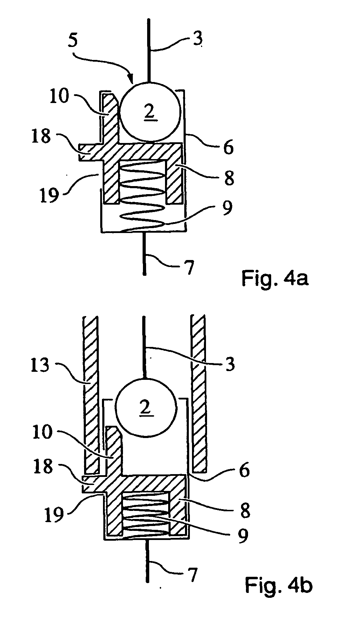

Dies ist jedoch bei der Ausbildung der Koppelungs- Entkopplungseinrichtung nach Figur 4 möglich. Der Schieber 8 ist vorzugsweise mit mindestens einem vorzugsweise radial aus dem Aufnahme-teil 6 auskragenden Vorsprung 18 ausgestattet, welcher in einem in Längsrichtung im Aufnahmeteil verlaufenden Schlitz 19 geführt ist. Bei geschlossener Koppelungs- Entkopplungseinrichtung 1 ist dieser Vorsprung 18 ohne Funktion (Figur 4a).

Beim Herausziehen der Haltestange 12 aus der Kopfstützenhülse 13 hingegen gerät der Vorsprung 18 in Anlage an die Unterkante der Kopfstützenhülse 13 und verlagert den das Mittel 8, vorzugsweise einen Schieber 8, bei einem weiteren Zug auf die Haltestange von der Aufnahmeöffnung 5 weg (Figur 4b). Das Endfitting 2 tritt nun aus dem Aufnahmeteil 6 heraus, während dieses wieder in der Kopfstützenhülse 13 verklemmt wird und zu einem erneuten Einsetzen der Kopfstütze bereit ist.

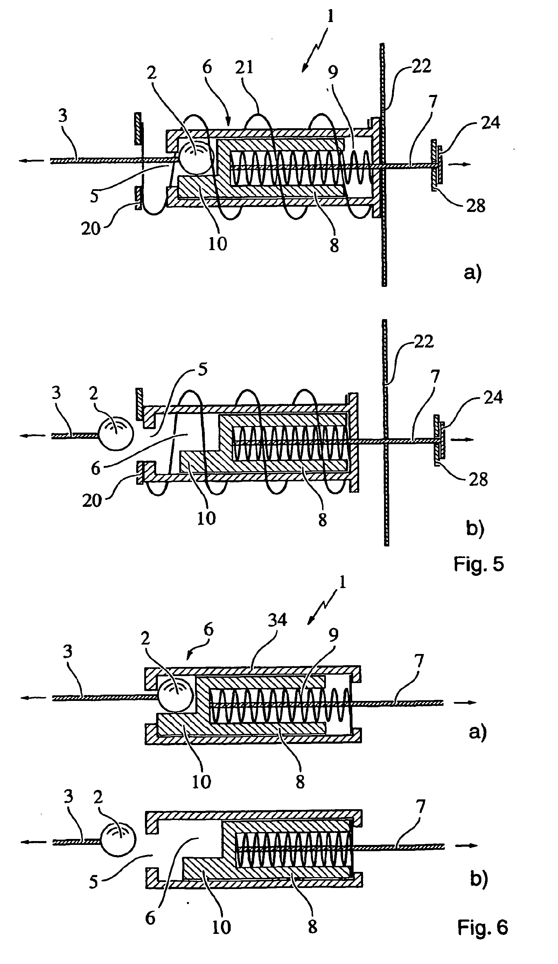

Figur 5 zeigt eine weitere Ausführungsform der erfindungsgemäßen Koppelungs- und/oder Entkoppelungseinrichtung. Die Vorrichtung 1 weist ein Segment 3, in dem vorliegenden Fall die Seele eines Bowdenzuges, mit einem Endfitting 2 auf, das in Figur 5a in das Aufnahmeteil 6 eingeführt ist und dort von dem Schieber 8, der ein Fortsatz 10 aufweist, der den Querschnitt der Aufnahmeöffnung 5 des Aufnahmeteils 6 reduziert, in seiner Stellung gehalten wird. Mittels der Feder 9 ist der Schieber 8 in Richtung der Öffnung 5 vorgespannt. Der Schieber 8 ist des Weiteren mit dem zweiten Segment 7, in dem vorliegenden Fall ebenfalls die Seele eines Bowdenzuges, verbunden, das an seinem rechten Ende einen Sperrstift 24 aufweist, der sich an der ortsfesten Lagerfläche 23 abstützt und somit den Weg des Segmentes 7 nach links begrenzt. Des Weiteren weist die Vorrichtung 1 eine Feder 21 auf, die sich an ihrem linken Ende an dem ortsfesten Lager 20 abstützt und mit ihrem rechten Ende mit einem Vorsprung an dem Gehäuse des Aufnahmeteils 6 zusammenwirkt und somit das Aufnahmeteil gegen das ortsfeste Lager 22 drückt. Wird nun hinreichend an dem Segment 3 gezogen, bewegt sich das Aufnahmeteil nach links und beide Federn 9, 21 werden gespannt. Der Schieber 8 bleibt durch den Sperrstift 24 in seiner ursprünglichen Stellung. Durch die Relativbewegung zwischen dem Aufnahmeteil 6 und dem Schieber 8 wird der mit dem Schieber verbundene Vorsatz 10 aus der Aufnahmeöffnung 5 heraus bewegt, so dass das Endfitting 2 aus der Aufnahmeöffnung 5 herausrutschen kann, was in Figur 5b dargestellt ist. Sobald sich das Endfitting 2 aus dem Aufnahmeteil 6 gelöst hat, drücken die Federn 9, 21 den Schieber 8 bzw. das Aufnahmeteil 6 in die in Figur 5a gezeigte Stellung zurück. Wird an dem Segment 7 gezogen, bewegt sich der Schieber 8 relativ zum Aufnahmeteil 6 nach rechts, während sich das Aufnahmeteil 6 nicht bewegt. Dadurch wird der mit dem Schieber verbundene Vorsatz 10 aus der Aufnahmeöffnung 5 heraus bewegt, so dass das Endfitting 2 aus der Aufnahmeöffnung 5 herausrutschen kann.

Figur 6 zeigt im wesentlichen die Ausführung gemäß Figur 5, wobei in dem vorliegenden Teil kein Lager 20, 22, 23 und keine Feder 21 vorhanden ist. Sobald die Zugkraft zwischen den Segmenten 3, 7, die die Federkraft der Feder 9 übersteigt, wird der Schieber 8 innerhalb des Aufnahmeteils 6 nach rechts bewegt, so dass der Fortsatz 10 die Aufnahmeöffnung 5 freigibt. In dem vorliegenden Teil ist das Aufnahmeteil 6 in einer Lagerung 34 gelagert, was aber nicht der Fall sein muß.

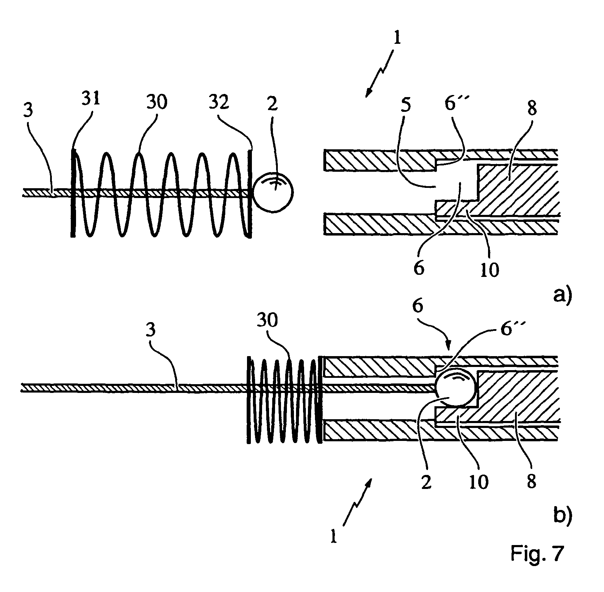

Figur 7 zeigt eine weitere Ausführungsform der erfindungsgemäßen Kopplungs- bzw. Entkopplungseinrichtung. In dem vorliegenden Fall ist das Segment 3 mit einer Feder 30 versehen, die sich zwischen zwei Anschlägen 31, 32 befindet, wobei der Anschlag 31 fest mit dem Segment 3 verbunden und der Anschlag 32 verschieblich auf dem Segment 3 angeordnet ist. Zur Herstellung der Verbindung wird das Endfitting 2 in die Aufnahmeöffnung 5 des Aufnahmeteils 6 eingeführt, hier gedrückt, und drückt dabei den Schieber 8 nach rechts, so dass die Aufnahmeöffnung 5 vollständig freigegeben wird und das Endfitting 2 in das Aufnahmeteil 6 aufgenommen werden kann. Sobald sich das Endfitting 2 in dem Aufnahmeteil 6 befindet (Figur 7b) schnappt der Schieber 8 durch eine nicht dargestellte Feder, die ihn in Richtung der Aufnahmeöffnung 5 vorspannt, in seine ursprüngliche Stellung (Figur 7a) zurück und der Vorsprung 10, der an dem Schieber angeordnet ist, blockiert die Öffnung 5 teilweise, so dass sich das Endfitting 2 hinter dem Vorsprung 6" verhakt und zwischen dem Segment 3 und der Kopplungseinrichtung 1 eine feste Verbindung entstanden ist. Während des Einführens des Endfitting 2 in den Aufnahmeteil 6 wird die Feder 30 gespannt, so dass das Endfitting immer an dem Vorsprung 6" anliegt und nicht gegen den Schieber 8 drückt und keine Geräuschentwicklung auftritt. Die Verbindung zwischen dem Segment 3 und der Kopplungs- und/oder Entkopplungseinrichtung 1 wird gelöst, in dem der Schieber 8 nach rechts bewegt wird. Dadurch gibt der Fortsatz 10 die Öffnung 5 vollständig frei und durch die Vorspannung der Feder 30 springt das Endfitting 2 aus dem Aufnahmeteil 6, so dass die Verbindung gelöst ist.

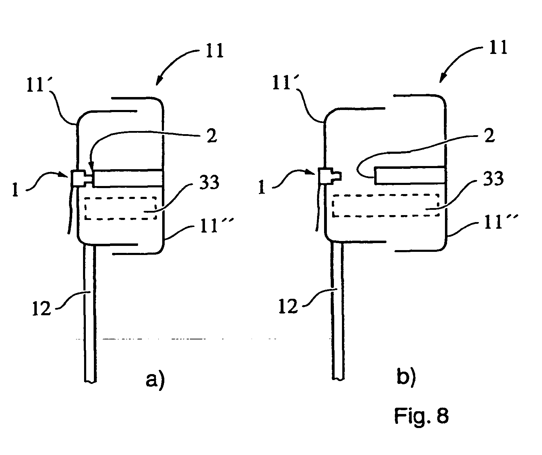

Die in Figur 8 gezeigte Kopfstütze 11 besteht aus einem Basisteil 11', welches über mindestens eine, vorzugsweise zwei Haltestangen 12 mit der Rückenlehne eines Fahrzeugsitzes verbunden ist. Auf der dem Sitzinsassen zugewandten Seite ist die Kopfstütze 11 mit einem Polsterteil 11" ausgestattet, welches nach dem Lösen einer vorzugsweise erfindungsgemäßen Kopplungs- und/oder Entkopplungseinrichtung 1 aus einer Gebrauchssteilung (Figur 8a) zum Kopf des Sitzinsassen hin in eine Sicherheitsstellung (Fig. 8b) verlagerbar ist. Hierzu kann beispielsweise eine Antriebseinrichtung verwendet werden, welche in WO 2005/097545 A, insbesondere in den Figuren 2 bis 7 offenbart ist.

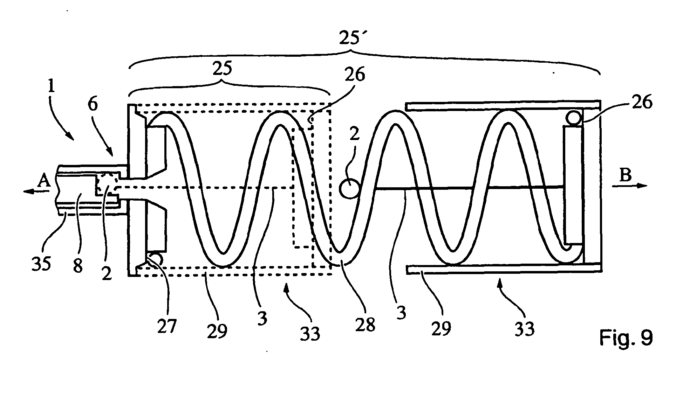

Die Koppelungseinrichtung 1 besteht aus einem im Ausführungsbeispiel kugelförmigen Endfitting 2, welcher in Gebrauchsstellung der Kopfstütze 11 in einem Aufnahmeteil 6 gehalten ist und das Polsterteil 11" in seiner Lage relativ zum Basisteil 11' sichert. Nach dem Verschieben eines Schiebers (*siehe* hierzu Ausführungsbeispiel nach Fig. 9) verlagert sich das Polsterteil 11" unter der Wirkung der nur angedeuteten Antriebseinrichtung 33 relativ zum Basisteil 11' in Richtung des Kopfes des Insassen. Der Schieber 8 (vgl. Figur 9) kann beispielsweise pyrotechnisch, elektromagnetisch oder, durch eine Bowdenzugverbindung mit einem in der Rückenlehne angeordneten Aktuator auch mechanisch, bewegt werden.

Bei der Ausbildung nach Fig. 9 ist die Antriebseinrichtung 33 mit der Koppelungseinrichtung 1 zu einer Baueinheit 25 (Gebrauchssteilung, gestrichelte Darstellung) bzw. 25' (Sicherheitsstellung) zusammengefasst. Der Endfitting 2 ist dabei über einen Zug 3 mit einer in Richtung der Koppelungseinrichtung 1 offenen Hülse 29 verbunden, in welcher Energiespeicher, beispielsweise eine Druckfeder 28, angeordnet ist. Die Druckfeder 28 stützt sich dabei an der Axialfläche 26 der Hülse 29 und an einer dieser gegenüberliegenden Fläche 27 der Koppelungseinrichtung 1 ab. Beim Betätigen des Schiebers 8 in Richtung des Pfeils A löst sich der Endfitting 2 aus dem Aufnahmeteil 6, so dass die Druckfeder 28 die Hülse 29 und das mit dieser verbundene Polsterteil 11 " zum Kopf des Sitzinsassen hin (Pfeil B) verlagert.

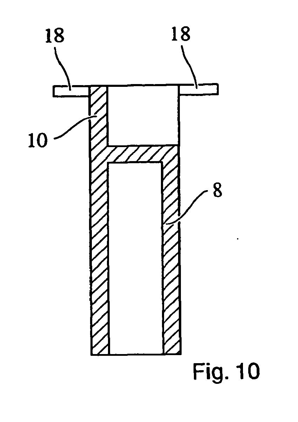

Figur 10 zeigt eine weitere Ausführungsform des Schiebers 8, wie er beispielsweise in einem Aufnahmeteil gemäß Figur 1 eingesetzt werden kann. Der Schieber ist wie der Schieber gemäß Figur 1 ausgeführt, nur dass er in dem vorliegenden Fall mindestens einen, hier zwei Vorsprünge 18 aufweist, die in Schlitzen des Aufnahmeteils 6 laufen.

### Bezugszeichenliste

- 1: Koppelungs-, Entkopplungseinrichtung
- 2: Endfitting
- 3: Segment, erstes Segment
- 4: Übertragungsmittel, Seele eines Bowdenzuges, Verbindungsmittel
- 5: Ausnahmeöffnung
- 6: Aufnahmeteil, Gehäuse
- 6': Endanschlag
- 6": Vorsprung
- 7: Segment, zweites Segment
- 8: Schieber
- 9, 21, 28, 30: Energiespeicher, Feder
- 10: Mittel, Fortsatz, Vorsprung
- 11: Kopfstütze
- 11': Basisteil der Kopfstütze
- 11": Polsterteil der Kopfstütze, crash-aktives Teil der Kopfsfütze
- 12, 12': Haltestange
- 13: Kopfstützenhülse
- 14: Aktuierungsmittel
- 15: Hülle
- 16: Bowdenzug
- 17: Stopfen
- 18: Vorsprung
- 19: Schlitz
- 20, 22, 23: Lagerung
- 24: Verbindungsmittel, Sperrstift
- 25: Baueinheit
- 26, 27: Fläche, Axialfläche
- 29: Gehäuse, Hülse
- 31, 32: Anschlag
- 33: Antriebseinrichtung. -teil
- 34: Aufnahme, Lagerung des Gehäuses 6
- A, B: Bewegungsrichtung
- D: Durchmesser des Endfittings
- Q, Q': freier Querschnitt

## Patentansprüche

1. Koppelungs- Entkopplungseinrichtung (1) für ein erstes und ein zweites Segment (3, 7) eines Übertragungs- und/oder Verbindungsmittels (4), wobei an dem ersten Segment (3) ein Endfitting (2) angeordnet ist und dieses Endfitting (2) mit einem an dem zweiten Segment (7) angeordneten Aufnahmeteil (6) eine Schnappverbindung eingeht, **dadurch gekennzeichnet, dass** der Aufnahmeteil (6) eine Öffnung (5) aufweist, deren Querschnitt reversibel veränderbar ist und dass das zweite Segment (7) mit einem Mittel (10), das in die Öffnung (5) hineinragt und deren Querschnitt verändert, zusammenwirkt und dadurch den Querschnitt der Öffnung (5) vergrößert.

2. Koppelungs- Entkopplungseinrichtung (1) nach Anspruch 1, **dadurch gekennzeichnet, dass** das Mittel (10) in Richtung der Öffnung (5) vorgespannt ist.

3. Koppelungs- Entkopplungseinrichtung (1) nach einem der Ansprüche 1 - 2, **dadurch gekennzeichnet, dass** das Endfitting (2) mit dem Mittel (10) zusammenwirkt und dadurch den Querschnitt der Öffnung (5) vergrößert.

4. Koppelungs- Entkopplungseinrichtung (1) nach Anspruch 1- 3, **dadurch gekennzeichnet, dass** sich der Querschnitt der Öffnung (5) wieder reduziert, nachdem das Endfitting in dem Aufnahmeteil aufgenommen oder aus diesem entfernt ist.

5. Koppelungs- Entkopplungseinrichtung nach einem der voranstehenden Ansprüche, **dadurch gekennzeichnet, dass** Übertragungsmittel (4) und/oder die Segmente (3, 7) die Seele eines Bowdenzuges (16) ist/sind.

6. Koppelungs- Entkopplungseinrichtung nach Anspruch 5, **dadurch gekennzeichnet, dass** der Bowdenzug (16) eine Hülle (15) aufweist und sich die Hülle (15) an dem Aufnahmeteil (6) abstützt.

7. Koppelungs- Entkopplungseinrichtung nach einem der voranstehenden Ansprüche, **dadurch gekennzeichnet, dass** sie Teil einer Crash-aktivierbaren-Kopfstütze (11) ist.

8. Koppelungs- Entkopplungseinrichtung nach Anspruch 7, **dadurch gekennzeichnet, dass** das erste Segment (3) an der Kopfstütze (11) oder deren Haltestange (12) und das Aufnahmeteil (6) an der Rückenlehne eines Kraftfahrzeugsitzes angeordnet ist.

9. Koppelungs- Entkopplungseinrichtung nach einem der voranstehenden Ansprüche, **dadurch gekennzeichnet, dass** sie ein Mittel zum Lösen der Verbindung zwischen dem Endfitting und dem Aufnahmeteil aufweist.

10. Kraftfahrzeugbauteil aufweisend eine Koppelungs- Entkopplungseinrichtung gemäß einem der voranstehenden Ansprüche.

11. Kraftfahrzeugbauteil nach Anspruch 10, **dadurch gekennzeichnet, dass** es Teil eines Kraftfahrzeugsitzes, einer Ladeklappe, einer Motorabdeckung, eines Verstaufaches ist.

12. Kraftfahrzeugbauteil nach Anspruch 10, **dadurch gekennzeichnet, dass** es zur Befestigung von Transport- oder Laderaumteilen in Kraftfahrzeugen dient.

13. Kraftfahrzeugbauteil nach Anspruch 10, **dadurch gekennzeichnet, dass** es zur Batteriepolverbindung dient.

## Claims

1. Coupling/uncoupling device (1) for a first and a second segment (3, 7) of a transmission means and/or connection means (4), an end fitting (2) being arranged on the first segment (3) and said end fitting (2) creating a snap connection with a receiver part (6) arranged on the second segment (7), **characterized in that** the receiver part (6) comprises an opening (5), the cross section thereof being able to be altered in a reversible manner, and **in that** the second segment (7) cooperates with a means (10), which projects into the opening (5) and alters the cross section thereof, and as a result enlarges the cross section of the opening (5) .

2. Coupling/uncoupling device (1) according to Claim 1, **characterized in that** the means (10) is pretensioned in the direction of the opening (5).

3. Coupling/uncoupling device (1) according to one of Claims 1-2, **characterized in that** the end fitting (2) cooperates with the means (10) and as a result enlarges the cross section of the opening (5).

4. Coupling/uncoupling device (1) according to Claim 1-3, **characterized in that** the cross section of the opening (5) is reduced again after the end fitting is received in the receiver part or is removed therefrom.

5. Coupling/uncoupling device according to one of the preceding claims, **characterized in that** transmission means (4) and/or the segments (3, 7) is/are the core of a Bowden cable (16).

6. Coupling/uncoupling device according to Claim 5, **characterized in that** the Bowden cable (16) has a sheath (15) and the sheath (15) is supported on the receiver part (6).

7. Coupling/uncoupling device according to one of the preceding claims, **characterized in that** it is part of a crash-activatable headrest (11).

8. Coupling/uncoupling device according to Claim 7, **characterized in that** the first segment (3) is arranged on the headrest (11) or the retaining bar (12) thereof and the receiver part (6) is arranged on the backrest of a motor vehicle seat.

9. Coupling/uncoupling device according to one of the preceding claims, **characterized in that** it comprises a means for the release of the connection between the end fitting and the receiver part.

10. Motor vehicle component comprising a coupling/uncoupling device according to one of the preceding claims.

11. Motor vehicle component according to Claim 10, **characterized in that** it is part of a motor vehicle seat, a tailgate, an engine cover, a storage compartment.

12. Motor vehicle component according to Claim 10, **characterized in that** it serves for fastening transported items or loaded items in motor vehicles.

13. Motor vehicle component according to Claim 10, **characterized in that** it serves for the battery pole connection.

## Revendications

1. Dispositif de couplage-découplage (1) pour un premier et un deuxième segment (3, 7) d'un moyen de transfert et/ou de liaison (4), un raccord d'extrémité (2) étant disposé sur le premier segment (3) et ce raccord d'extrémité (2) entrant en liaison d'encliquetage avec une partie de réception (6) disposée sur le deuxième segment (7), **caractérisé en ce que** la partie de réception (6) présente une ouverture (5), dont la section transversale peut être modifiée de manière réversible et **en ce que** le deuxième segment (7) coopère avec un moyen (10) qui pénètre dans l'ouverture (5) et modifie sa section transversale et de ce fait augmente la section transversale de l'ouverture (5).

2. Dispositif de couplage-découplage (1) selon la revendication 1, **caractérisé en ce que** le moyen (10) est précontraint dans la direction de l'ouverture (5).

3. Dispositif de couplage-découplage (1) selon l'une quelconque des revendications 1 et 2, **caractérisé en ce que** le raccord d'extrémité (2) coopère avec le moyen (10) et de ce fait augmente la section transversale de l'ouverture (5).

4. Dispositif de couplage-découplage (1) selon les revendications 1 à 3, **caractérisé en ce que** la section transversale de l'ouverture (5) diminue à nouveau après que le raccord d'extrémité a été reçu dans la partie de réception ou retiré de celle-ci.

5. Dispositif de couplage-découplage selon l'une quelconque des revendications précédentes, **caractérisé en ce que** le moyen de transfert (4) et/ou les segments (3, 7) est/sont les câbles d'un câble Bowden (16).

6. Dispositif de couplage-découplage selon la revendication 5, **caractérisé en ce que** le câble Bowden (16) présente une douille (15) et la douille (15) s'appuie sur la partie de réception (6).

7. Dispositif de couplage-découplage selon l'une quelconque des revendications précédentes, **caractérisé en ce qu'**il fait partie d'un appuie-tête activable en cas d'impact (11).

8. Dispositif de couplage-découplage selon la revendication 7, **caractérisé en ce que** le premier segment (3) est disposé sur l'appuie-tête (11) ou sa tige de retenue (12) et la partie de réception (6) est disposée sur le dossier d'un siège de véhicule automobile.

9. Dispositif de couplage-découplage selon l'une quelconque des revendications précédentes, **caractérisé en ce qu'**il présente un moyen pour desserrer la connexion entre le raccord d'extrémité et la partie de réception.

10. Composant de véhicule automobile présentant un dispositif de couplage-découplage selon l'une quelconque des revendications précédentes.

11. Composant de véhicule automobile selon la revendication 10, **caractérisé en ce qu'**il fait partie d'un siège de véhicule automobile, d'une trappe de chargement, d'un capot de moteur, d'un compartiment de rangement.

12. Composant de véhicule selon la revendication 10, **caractérisé en ce qu'**il sert à la fixation de pièces de l'espace de chargement ou de transport dans des véhicules automobiles.

13. Composant de véhicule automobile selon la revendication 10, **caractérisé en ce qu'**il sert à la connexion des pôles d'une batterie.
